# EUROPEAN PATENT SPECIFICATION

(11) **EP 3 446 891 B1**
(45) Date of publication and mention of the grant of the patent: **02.09.2020**
(21) Application number: 17785711.7
(22) Date of filing: 16.03.2017
(51) Int. Cl.: B60C 11/12, B29C 33/02, B29C 35/02, B29D 30/06

(54) **TIRE AND TIRE MOLD**
REIFEN UND REIFENGUSSFORM
PNEU ET MOULE DE PNEU

(30) Priority: 20.04.2016 JP 2016084482; 20.04.2016 JP 2016084487; 20.04.2016 JP 2016084489
(43) Date of publication of application: 27.02.2019
(73) Proprietor: Bridgestone Corporation, Tokyo 104-8340 (JP)
(72) Inventor: KAJI, Yoshio, Tokyo 104-8340 (JP); MATSUYAMA, Ryunosuke, Tokyo 104-8340 (JP); KATAYAMA, Shinsaku, Tokyo 104-8340 (JP)
(74) Representative: Oxley, Robin John George
(86) International application number: PCT/JP2017/010644
(87) International publication number: WO 2017/183369

(56) References cited:
- EP-A1- 2 913 205
- EP-A1- 3 375 638
- JP-A- H1 080 923
- JP-A- S63 235 107
- JP-A- 2004 210 043
- JP-A- 2007 055 285
- JP-A- 2014 189 100
- JP-A- 2015 205 614

## Description

### [Technical Field]

The present invention relates to a tire having a plurality of sipes extended along a tire width direction and formed in a block, and a tire mold.

### [Background Art]

Conventionally, in order to improve performance on ice and snow roads (traction, braking performance or the like), a block in which many sipes are formed is widely used in a tire (pneumatic tire) adapting to travelling on the ice and snow roads.

The performance on the ice and snow roads can be improved by such sipes, while rigidity of the block is deteriorated. Accordingly, it is difficult to secure performance on non-ice and snow roads, for example braking performance, cornering performance, wear resistant performance or the like.

In this respect, in order to derive both of the performance on the ice and snow roads and the performance on the non-ice and snow roads that are contradictory to each other, a tire having a block in which an intermediate portion of a sipe in a tire radial direction is inclined is known (for example, Patent Literature 1).

According to the tire having such a block, the blocks are mutually supported by the portion in which the sipe is inclined, and therefore the rigidity of the block is improved. With this, the performance on the ice and snow roads and the performance on the non-ice and snow roads are improved.

### [Citation List]

### [Patent Literature]

[PTL 1] Japanese Unexamined Patent Application Publication No. H11-078432

Patent document JP 2014-189100 A discloses a tyre having the features of the preamble of claim 1.

### [Summary of Invention]

However, in association with the performance improvement of a vehicle, further high performance on the ice and snow roads, for example braking performance by an edge effect on the ice and snow roads, and further high performance on the non-ice and snow roads, for example wear resistant performance on the non-ice and snow roads, are desired in the tire having the block in which the sipe described above is formed. Further, it is also desired to manufacture the tire efficiently while improving both of the performances and suppressing a manufacturing cost.

Accordingly, an object of the present invention is, in consideration of the problem described above, to provide a tire having a block in which a sipe is formed, the tire being capable of being manufactured efficiently and capable of deriving performance on the ice and snow roads and performance on non-ice and snow roads at a high level.

In one aspect of the present invention, a tire includes a sipe opened to a wheel tread of a tread portion, according to claim 1.

The following description may contain aspects which are not necessarily a part of the claimed invention.

### [Brief Description of Drawings]

[Fig. 1] Fig. 1 is a plane developed view of a part of a tread of a pneumatic tire 10.
[Fig. 2] Fig. 2 is a perspective view of a part of the tread of the pneumatic tire 10 including a plurality of blocks 20.
[Fig. 3] Fig. 3 is a side view of a sipe 100 in a tire width direction view.
[Fig. 4] Fig. 4 is a view illustrating a position of the sipe 100 in the block 20 in the tire width direction view.
[Fig. 5] Fig. 5 is a side view of a part of the block 20 in the tire width direction view (the pneumatic tire 10 is rolling on an ice and snow road).
[Fig. 6] Fig. 6 is a plane developed view of a part of a tread of a pneumatic tire 10A.
[Fig. 7] Fig. 7 is a perspective view of a part of the tread of the pneumatic tire 10A including a plurality of blocks 20A.
[Fig. 8] Fig. 8 is a plane view of a part of the block 20A in a tread surface view.
[Fig. 9] Fig. 9 is schematic cross-sectional view of a part of a tire mold 400 including an an unvulcanized tire 10P.
[Fig. 10] Figs. 10 are a perspective view of a blade 500 and a view of a surface of the block 20A on which a sipe 100A is formed by the blade 500.
[Fig. 11] Fig. 11 is a side view of a sipe 100B in a tire width direction view.
[Fig. 12] Figs. 12A to 12H are views illustrating modifications of the conventional sipe and the sipe 100.
[Fig. 13] Fig. 13 is a view illustrating a modification of the sipe 100.

### [Description of Embodiments]

Hereinafter, embodiments will be described with reference to drawings. Here, the same or similar reference numerals are assigned to the same function or configuration, and therefore the description thereof is omitted as needed.

### First embodiment

### (1) Schematic configuration of whole of tire

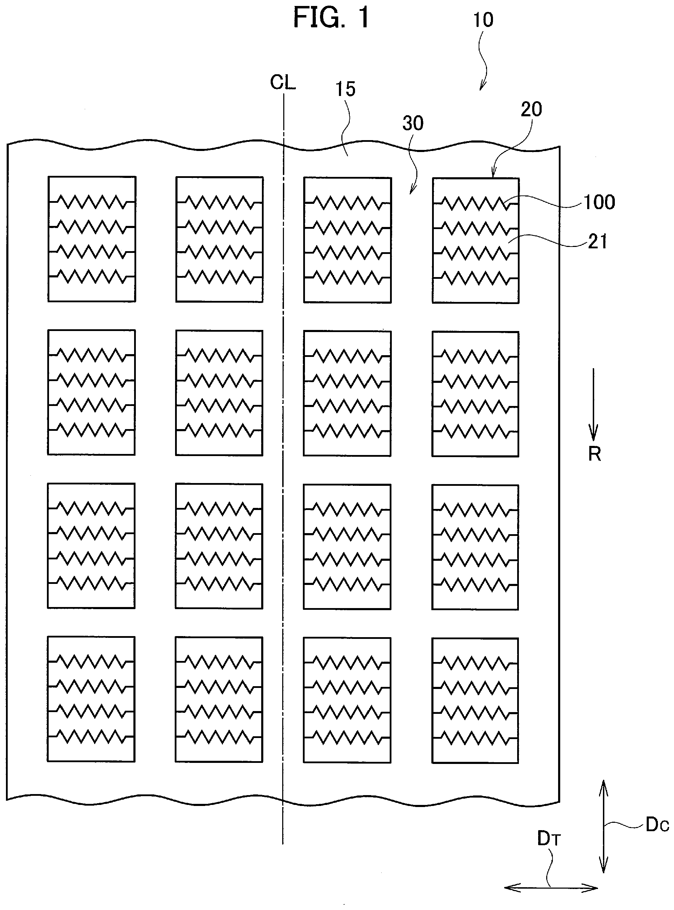

Fig. 1 is a plane developed view of a part of a tread of a pneumatic tire 10 according to the present embodiment. As shown in Fig. 1, a plurality of blocks 20 (land portion blocks) is formed in a tread portion 15 of the pneumatic tire 10.

Specifically, the pneumatic tire 10 includes a plurality of block rows (land block rows) in which blocks 20 are arranged along a tire circumferential direction Dc. In the present embodiment, two block rows are formed in respective regions divided by the tire equatorial line CL. Here, the number of the block rows, a position and a shape of the block 20 are not limited to the configuration shown in Fig. 1.

The pneumatic tire 10 is adapted to travel on ice and snow roads. In particular, the pneumatic tire 10 derives both of the performance on the ice and snow roads and the performance on non-ice and snow roads (dry road and wet road) at a high level. In order to derive the desired performance, a rotation direction R of the pneumatic tire 10 is designated as shown in Fig. 1.

The block 20 is formed to contact with a road surface. Specifically, a wheel tread 21 of the block 20 is mainly contacted with the road surface. A groove 30 is formed between the blocks 20 adjacent to each other. The groove 30 extends in the tire circumferential direction Dc and a tire width direction D_{T} to define the block rows.

A plurality of sipes 100 extended along the tire width direction D_{T} (a predetermined direction) is formed in a tread portion 15, namely the wheel tread 21 of the block 20. The sipe 100 is opened to the wheel tread 21 of the block 20.

### (2) Configuration of block 20

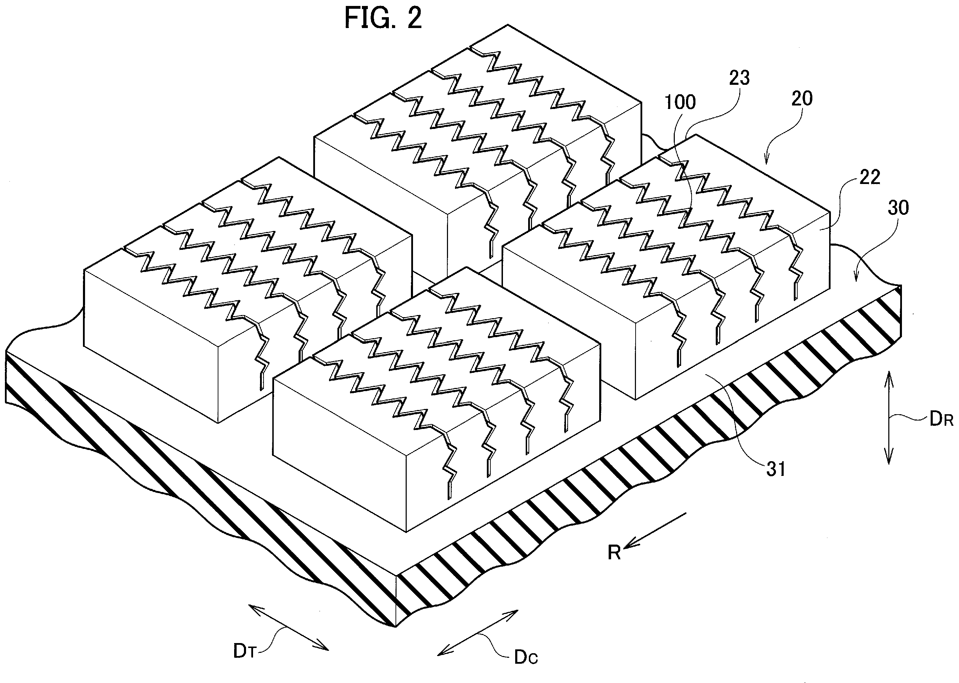

Fig. 2 is a perspective view of a part of the tread of the pneumatic tire 10 including a plurality of the blocks 20. As shown in Fig. 2, four sipes 100 extended along the tire width direction D_{T} are formed in the block 20.

The sipe 100 is formed in a zigzag manner in the tire width direction D_{T}. Further, the sipe 100 includes a portion bent in a zigzag manner in a tire radial direction D_{R}, namely a depth direction of the sipe 100.

The sipe 100 is formed from one side wall 22 to another side wall 23 of the block 20 in the tire width direction D_{T}. The sipe 100 is opened to both of the side walls (side wall 22 and side wall 23) of the block 20 in the tire width direction D_{T}.

The sipe 100 does not reach a groove bottom 31 of the groove 30 and therefore the sipe 100 is terminated at an outer side in the tire radial direction D_{R} with respect to the groove bottom 31. That is, the depth of the sipe 100 is smaller than a depth of the groove 30.

### (3) Shape of sipe 100

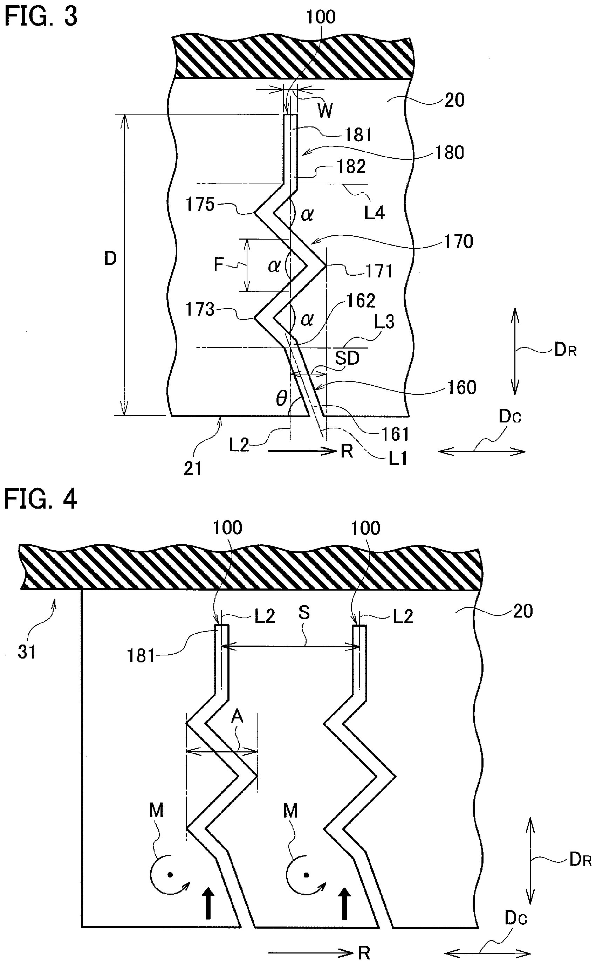

Fig. 3 is a side view of the sipe 100 in a tire width direction view. Specifically, Fig. 3 is a side view of the sipe 100 in a state in which the wheel tread 21 of the block 20 to be contacted with the road surface is arranged at a lower side in the figure.

As shown in Fig. 3, the sipe 100 is formed by three portions. Specifically, the sipe 100 includes a first sipe 160, a bent portion 170, and a second sipe 180.

The first sipe 160 is formed at a side of the wheel tread 21 of the block 20. The first sipe 160 is formed linearly in the tire width direction view and inclined against the tire radial direction D_{R}.

Specifically, the first sipe 160 is inclined in a direction opposite to a rotation direction R of the pneumatic tire 10 with respect to the tire radial direction D_{R} in the tire width direction view. That is, the first sipe 160 is inclined rearward in the rotation direction R.

It is preferable that a sharp angle θ between the first sipe 160 and the wheel tread 21 is set in a range between 70 degrees and 85 degrees in the tire width direction view.

Further, the first sipe 160 includes an opening end 161 opened to the wheel tread 21. The opening end 161 is offset from a straight line L2 passing the center of the second sipe 180 and being parallel to the tire radial direction D_{R}, to a side of the rotation direction R in the tire width direction view. Here, the center of the second sipe 180 denotes a center of a groove width of the second sipe 180 along the tire circumferential direction Dc.

A straight line L1 (first sipe center line) passing an inner end (inner end 162) in the tire radial direction of the first sipe 160 and an outer end (opening end 161) in the tire radial direction of the first sipe 160 is inclined against the tire radial direction D_{R} in the tire width direction view. On the other hand, the above-described straight line L2 (second sipe center line) passing an inner end (end 181) in the tire radial direction of the second sipe 180 and an outer end (end 182) in the tire radial direction of the second sipe 180 is along the tire radial direction D_{R} to be parallel to the tire radial direction D_{R}.

Further, the opening end 161 is not located on the straight line L2 and therefore the opening end 161 is offset forward in the rotation direction R.

The bent portion 170 is communicated with the inner end (inner end 162) in the tire radial direction of the first sipe 160 and the outer end (end 182) in the tire radial direction of the second sipe 180, and the bent portion 170 is bent in a tire circumferential direction (a predetermined direction). That is, the bent portion 170 is bent in a zigzag manner in an extending direction view of the sipe 100, namely in the tire width direction view in the present embodiment. Further, the bent portion 170 is located at an inner side in the tire radial direction D_{R} with respect to the first sipe 160.

The bent portion 170 includes a first bent portion 171, a second bent portion 173, and second bent portion 175.

The first bent portion 171 is bent to be projected in the rotation direction R, namely an apex is located at a forward side in the rotation direction R in the tire width direction view. That is, the first bent portion 171 is bent to one side in the tire circumferential direction Dc in the tire width direction view.

Further, the first bent portion 171 is located at a side of the first sipe 160 with respect to the straight line L2 (second sipe center line) in the tire width direction view.

Each of the second bent portion 173 and the second bent portion 175 is bent opposite to the first bent portion 171. That is, each of the second bent portion 173 and the second bent portion 175 is bent to another side in the tire circumferential direction Dc.

Further, each of the second bent portion 173 and the second bent portion 175 is located at a side opposite to the first sipe 160 with respect to the straight line L2 in the tire width direction view.

Specifically, the second bent portion 173 is formed to be closer to the first sipe 160 with respect to the first bent portion 171. The second bent portion 173 is bent opposite to the first bent portion 171 in the tire width direction view.

The second bent portion 175 is formed to be closer to the second sipe 180 with respect to the first bent portion 171. The second bent portion 175 is bent opposite to the first bent portion 171 in the tire width direction view.

An angle of the first bent portion 171, an angle of the second bent portion 173 and an angle (α) of the second bent portion 175 are set to the same angle. In the present embodiment, the angle α is set to 45 degrees. That is, in the present embodiment, a length of the first bent portion 171 in the tire radial direction D_{R}, specifically a period F defined by a length of the first bent portion 171 in the tire radial direction D_{R} on the straight line L2, is the same as a period F of each of the second bent portion 173 and the second bent portion 175. Here, in this case, the period F denotes a length of one bent portion in the tire radial direction D_{R}, namely a half of a period.

Further, in the present embodiment, the number of the second bent portions is two of the second bent portion 173 and the second bent portion 175, and the number of the first bent portions is one of the first bent portion 171. That is, the number of the second bent portions is larger than the number of the first bent portions.

Further, in the present embodiment, a minimum distance SD between the straight line L2 and the apex of the first bent portion 171 (a position shown by a reference sign 171 in Fig. 3) is the same as a minimum distance SD along the tire circumferential direction Dc between the inner end (inner end 162) in the tire radial direction of the first sipe 160 and the outer end (opening end 161) in the tire radial direction of the first sipe 160. Here, the same distances denote that one distance is in a range of ± 20% of another distance.

The second sipe 180 is continued to the bent portion 170 and located at an inner side in the tire radial direction D_{R} with respect to the bent portion 170. That is, the second sipe 180 is located at the inner side in the tire radial direction with respect to the first sipe 160.

As described above, the opening end 161 of the first sipe 160 is not located on the straight line L2 passing the center of the second sipe 180 and the opening end 161 is offset to the side of the rotation direction R, while the inner end 162 of the first sipe 160 is located on the straight line L2 in the tire width direction view. The inner end 162 is formed as an end portion at the inner side in the tire radial direction D_{R} of the first sipe 160, namely a boundary with the bent portion 170, specifically a boundary portion with the second bent portion 173.

As described above, the depth of the sipe 100 is smaller than the depth of the groove 30 (see Fig. 2). Specifically, the end 181 at the inner side in the tire radial direction D_{R} of the second sipe 180 is terminated at the outer side in the tire radial direction D_{R} with respect to the groove bottom 31 (see Fig. 2 and Fig. 4) of the groove 30.

Further, a depth D of the sipe 100 may be different depending on a size of the pneumatic tire 10 or an applied vehicle type. In a case of a general passenger vehicle tire (for example, 205/55R16), it is preferable to set the depth D of the sipe 100 to approximately 7.0 mm. Further, it is preferable to set a width W of the sipe 100 to approximately 0.4 mm. Here, the width W may be set in a range between 0.1 mm and 1.0 mm.

More specifically, a depth of the first sipe 160 (a distance along the tire radial direction D_{R} between the wheel tread 21 and a straight line L3) is approximately 1.7 mm. Similarly, a depth of the second sipe 180 (a distance along the tire radial direction D_{R} between a straight line L4 (end 182) and the end 181) is approximately 1.7 mm.

A depth of the bent portion 170 (a distance along the tire radial direction D_{R} between the straight line L3 and the straight line L4) is approximately 3.6 mm. A bent point (apex) of the first bent portion 171 is located at position (D/2) of a half of the depth D.

### (4) Position of sipe 100 in block 20

Fig. 4 is a view illustrating a position of the sipe 100 in the block 20 in the tire width direction view. Specifically, Fig. 4 is a side view of a part of the block 20 in the tire width direction view.

As shown in Fig. 4, the sipes 100 adjacent to each other in the block 20 are formed to be separated by an interval S. The interval S defined by a distance between the straight lines L2 passing the respective sipes 100 adjacent to each other.

As described above, the sipe 100 includes the bent portion 170 bent in a zigzag manner. The amplitude A of the bent portion 170 is approximately 1.2 mm in a case in which the depth D of the sipe 100 is 7.0 mm. Here, the amplitude A denotes a width of the bent portion 170 along the tire circumferential direction Dc. The interval S between the sipes 100 adjacent to each other is larger than the amplitude A of the bent portion 170.

### (5) Functions and effects

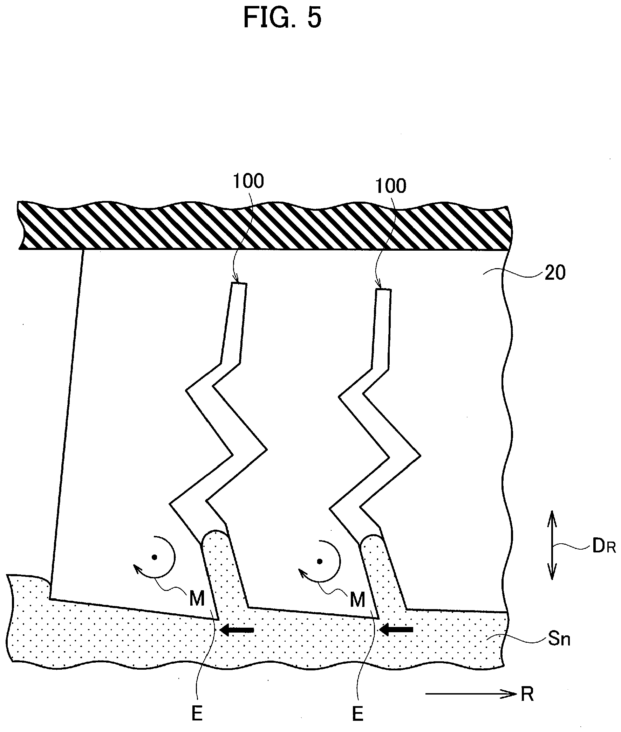

Next, functions and effects of the pneumatic tire 10 are described. At first, the function of the block 20 is described with reference to Fig. 4 and Fig. 5. As described above, Fig. 4 is a side view of a part of the block 20 in the tire width direction view. Fig. 5 is also a side view of a part of the block 20 in the tire width direction view. Here, Fig. 5 schematically illustrates a shape of the block 20 when the pneumatic tire 10 is rolling on an ice and snow road.

As shown in Fig. 4, on the non-ice and snow road, when the pneumatic tire 10 rotates in the rotation direction R while the block 20 is contacting with the road surface, the longitudinal force (Fx) in a direction opposite to the rotation direction R is generated in the block 20, and the block 20 is deformed in a direction of a black thick arrow shown in Fig. 4 by the load applied to the pneumatic tire 10.

As described above, the sipe 100, specifically the first sipe 160, is inclined in a direction opposite to the rotation direction R, and therefore the moment M rotating in a direction (counterclockwise direction in the figure) as same as the rotation direction R is generated in the block 20. Further, the second sipe 180 is formed linearly along the tire radial direction D_{R}, and therefore the second sipe 180 facilitates the generation of the moment M.

Thus, when the block 20 divided by the sipe 100 rolls on the road surface, the ground contact pressure at a kick-out side becomes larger, while the ground contact pressure at a step-in side becomes smaller in the block 20.

As a result, even in a case in which the longitudinal force (Fx) is applied to the block 20, falling of the block 20 is suppressed and the ground contact pressure is made uniform easily when the block 20 rolls on the road surface. Accordingly, the heel-and-toe wear, which is a phenomenon in which a portion at the kick-out side is worn earlier than a portion at the step-in side, can be suppressed. In particular, the heel-and-toe wear at an early stage in use of the pneumatic tire 10 can be effectively suppressed.

Further, with the shape of the sipe 100, the divided blocks 20 can be supported to each other when the load is applied. With this, deterioration of the rigidity of the block 20 can be suppressed, and therefore the performance on the non-ice and snow roads, in particular the braking performance and the cornering performance can be secured.

On the other hand, as shown in Fig. 5, on the ice and snow road, when the pneumatic tire 10 rotates in the rotation direction R while the block 20 is contacting with the road surface, the longitudinal force (Fx) in a direction opposite to the rotation direction R is generated in the block 20, and the block 20 is deformed in a direction of a black thick arrow shown in Fig. 5 due to ice and snow Sn entered into the sipe 100.

As a result, the moment M rotating in a direction (clockwise direction in the figure) opposite to the rotation direction R is generated in the block 20. Further, the second sipe 180 is formed linearly along the tire radial direction D_{R}, and therefore the second sipe 180 facilitates the generation of the moment M.

Of course on the ice and snow road, similar to the non-ice and snow road, the block 20 is deformed in the tire radial direction D_{R} by the load applied to the pneumatic tire 10, however contrary to the non-ice and snow road such as an asphalt road surface or the like, the deformation of the block 20 is different from that on the non-ice and snow road because the ice and snow Sn itself is deformed.

Further, since such moment M is generated, an edge E of the block 20 is easily protruded, and therefore the edge E is easily entered into the ice and snow Sn on the road surface. With this, the performance on the ice and snow road can be further improved.

Next, an evaluation test result of the pneumatic tire 10 is described. Table 1 shows configurations of the tires used in the evaluation tests, and each value of the test results.

**[Table 1]**

| | Comparative example 1 | Comparative example 2 | Comparative example 3 | Example 1 | Example 2 | Example 3 |
|---|---|---|---|---|---|---|
| Inclined angle θ | N.A. | 90 | 60 | 85 | 80 | 70 |
| Wear resistant performance | 100 | 120 | 115 | 122 | 125 | 124 |
| Ice and snow road performance | 100 | 95 | 95 | 100 | 100 | 100 |

A pneumatic tire according to the comparative example 1 includes a block in which a sipe having a shape different from that of the sipe 100 is formed. Specifically, the sipe is extended along the tire width direction and formed in a zigzag manner in the tread surface view. That is, the shape of the sipe is change only in the tire width direction and the tire circumferential direction and is not changed in the tire radial direction (so-called two-dimensional sipe).

A pneumatic tire according to the comparative example 2 includes a block in which a sipe having a shape as same as that of the sipe 100 is formed, while the sipe has a sharp angle θ of 90 degrees between the first sipe 160 and the wheel tread 21. Further, a pneumatic tire according to the comparative example 3 includes a block in which a sipe having the angle θ of 60 degrees is formed.

Pneumatic tires according to the examples 1 to 3 include blocks in which sipes having the angles θ of 85 degrees, 80 degrees, and 70 degrees are formed respectively. Here, the angle α of the bent portion of the sipe in each of the comparative examples 2 and 3 and the examples 1 to 3 is set to 45 degrees.

A test condition is as described below.

Tire size: 195/65R15
Inner air pressure: 200 kPa
Test vehicle: passenger vehicle
"Wear resistant performance" is a value of a remaining groove amount of each of the pneumatic tires travelled for 10,000 km by using a drum test machine, and the value is indexed against a remaining groove amount of the pneumatic tire according to the comparative example 1.

"Ice and snow road performance" is a value of a starting acceleration time (50 m arrival time) on the ice and snow road of the test vehicle to which each of the pneumatic tires is mounted, and the value is indexed against a starting acceleration time according to the comparative example 1.

As shown in Table 1, in each of the examples 1 to 3, the wear resistant performance is largely improved while securing the ice and snow road performance.

In each of the comparative examples 2 and 3, the wear resistant performance is improved compared to that in the comparative example 1 (two-dimensional sipe), however the improvement thereof is limited compared to that in each of the examples 1 to 3. Further, the ice and snow road performance in each of the comparative examples 2 and 3 is lower than that in the comparative example 1.

In this way, it is preferable that the sharp angle θ between the first sipe 160 and the wheel tread 21 is at least set in a range between 70 degrees and 85 degrees. In a case in which the angle θ exceeds 85 degrees to be close to 90 degrees, it is difficult to obtain the function on the ice and snow road described above (see Fig. 5). On the other hand, in a case in which the angle θ falls below 70 degrees to be close to 60 degrees, the balance of the ground contact pressure of the block is deteriorated to the contrary, and therefore the heel-and-toe wear is not suppressed.

That is, according to the pneumatic tire 10, as shown in Fig. 3, the sipe 100 is formed such that the straight line L1 (first sipe center line) is inclined against the tire radial direction D_{R} and the straight line L2 (second sipe center line) is along the tire radial direction D_{R}.

Thus, the capability (edge effect) that scratches the ice and snow road by the edge E of the first sipe 160 and the performance (wear resistant performance or the like) improvement by the improvement of the block rigidity because of the suppression of the falling of the block 20 by the second sipe 180 can be derived. Further, the sipe 100 has a simple shape compared to a conventional three-dimensional sipe, and therefore excellent with drawability (so-called extractability) of a blade of a tire mold in manufacturing the tire can be obtained. In particular, in the present embodiment, the first sipe 160 is formed linearly, the extractability is further excellent, and therefore the generation of the moment M described above is facilitated.

In the present embodiment, the number of the second bent portions 173 is larger than the number of the first bent portions 171. Further, the minimum distance SD between the straight line L2 and the apex of the first bent portion 171 is the same as the minimum distance SD along the tire circumferential direction Dc between the inner end (inner end 162) in the tire radial direction of the first sipe 160 and the outer end (opening end 161) in the tire radial direction of the first sipe 160.

Such a shape facilitates the generation of the moment M (see Fig. 5) especially on the ice and snow roads, and therefore the performance on the ice and snow road can be further improved.

### Second embodiment

Next, a second embodiment is described. Hereinafter, a configuration different from that of the pneumatic tire 10 according to the first embodiment is mainly described, and therefore a description of a similar configuration is omitted as needed.

### (1) Schematic configuration of whole of tire

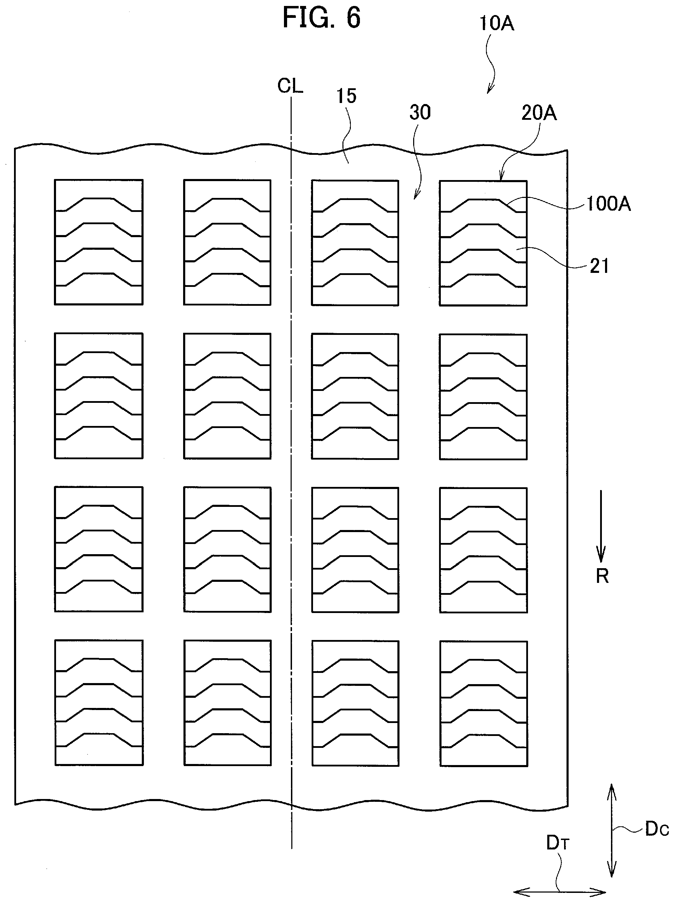

Fig. 6 is a plane developed view of a part of a tread of a pneumatic tire 10A according to the present embodiment. As shown in Fig. 6, a plurality of blocks 20A (land portion blocks) is formed in a tread portion 15 of the pneumatic tire 10A.

A plurality of sipes 100A extended along the tire width direction D_{T} (a predetermined direction) is formed in the tread portion 15, namely a wheel tread 21 of the block 20A. The sipe 100A is not formed linearly along the tire width direction D_{T} such like the shape of the sipe 100 of the pneumatic tire 10 but formed to include a portion bent in a trapezoidal manner.

### (2) Configuration of block 20A

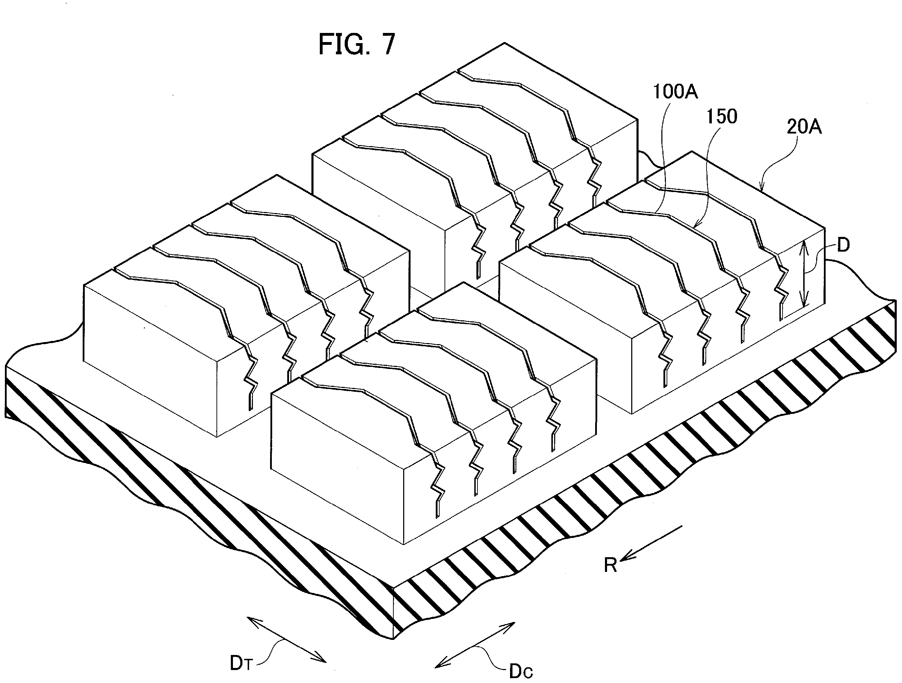

Fig. 7 is a perspective view of a part of the tread of the pneumatic tire 10A including a plurality of the blocks 20A.

The sipe 100A is extended in the tire width direction D_{T} and formed to include a projection portion 150 bent in a trapezoidal manner in the tread surface view. The projection portion 150 is formed at a center portion of the block 20A in the tire width direction D_{T}.

The projection portion 150 is bent in a direction opposite to the rotation direction R, namely the projection portion 150 is formed in a projected manner. Specifically, the projection portion 150 is bent rearward in the rotation direction R, namely the projection portion 150 is formed in a projected manner.

Further, as described above, the first sipe 160 is inclined in a direction opposite to the rotation direction R against the tire radial direction D_{R} in the tire width direction view. Accordingly, an inclined direction of the first sipe 160 and the bent direction of the projection portion 150 are the same direction to each other. Specifically, the inclined direction of the first sipe 160 and the bent direction of the projection portion 150 are the direction opposite to the rotation direction R.

### (3) Shape of sipe 100A

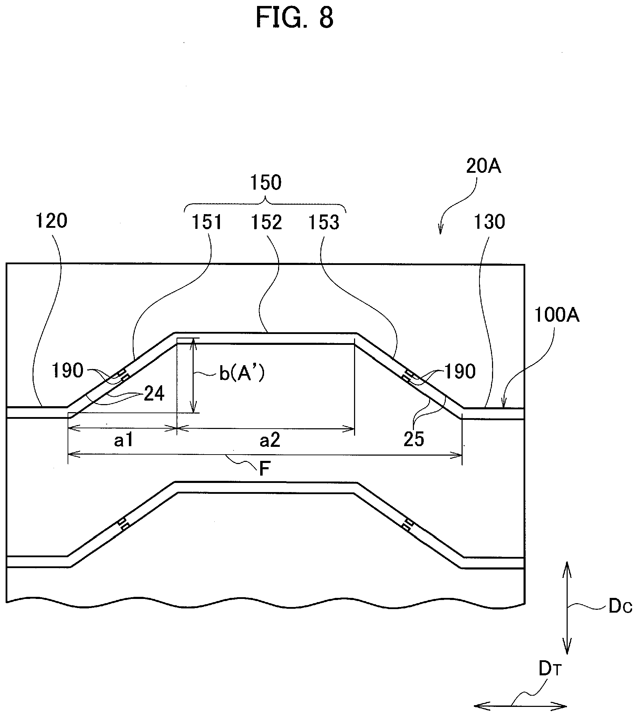

Fig. 8 is a plane view of a part of the block 20A in the tread surface view. As shown in Fig. 8, the sipe 100A is formed by a first straight sipe 120, a second straight sipe 130, and the projection portion 150.

Further, as shown in Fig. 7, a shape of the sipe 100A with respect to a depth direction is the same as the shape of the sipe 100. In the sipe 100A, a width of the first straight sipe 120, a width of the second straight sipe 130 and a width of the projection portion 150 are the same to each other.

The first straight sipe 120 is extended along the tire width direction D_{T} and formed linearly in the tread surface view. Similarly, the second straight sipe 130 is extended along the tire width direction D_{T} and formed linearly in the tread surface view.

The projection portion 150 is formed between the first straight sipe 120 and the second straight sipe 130. As described above, the projection portion 150 is projected in the tire circumferential direction Dc (crossing direction). Here, in the present embodiment, only one projection portion 150 is formed, and the projection portion 150 is projected toward one side in the tire circumferential direction Dc in the tread surface view.

The projection portion 150 is formed by a first inclined portion 151, a straight portion 152, and a second inclined portion 153. The straight portion 152 is extended linearly in the tire width direction D_{T}.

The first inclined portion 151 is formed between the first straight sipe 120 and the straight portion 152. The first inclined portion 151 is inclined against the tire width direction D_{T}. That is, the first inclined portion 151 is also inclined against the tire radial direction D_{R}. Here, the meaning of the first inclined portion 151 being inclined denotes a state in which the first inclined portion 151 is neither parallel nor orthogonal to the tire width direction D_{T} and the tire radial direction D_{R}.

More specifically, the first inclined portion 151 is continued to one end of the straight portion 152 and one end of the first straight sipe 120. The first inclined portion 151 is inclined to spread toward an outer side in the tire width direction from the one end of the straight portion 152.

The second inclined portion 153 is formed between the second straight sipe 130 and the straight portion 152. The second inclined portion 153 is also inclined against the tire width direction D_{T}. That is, the second inclined portion 153 is also inclined against the tire radial direction D_{R}. However, the second inclined portion 153 is inclined in a direction opposite to the first inclined portion 151.

More specifically, the second inclined portion 153 is continued to another end of the straight portion 152 and one end of the second straight sipe 130. The second inclined portion 153 is inclined to spread toward an outer side in the width direction from the another end of the straight portion 152.

The straight portion 152 is formed between the first inclined portion 151 and the second inclined portion 153. The straight portion 152 is extended along the tire width direction D_{T}, specifically the straight portion 152 is extended to be parallel to the tire width direction D_{T}.

In the present embodiment, a width a1 along the tire width direction D_{T} of the first inclined portion 151 is approximately 2.0 mm. A width along the tire width direction D_{T} of the second inclined portion 153 is also approximately 2.0 mm. Further, a width a2 along the tire width direction D_{T} of the straight portion 152 is approximately 5.0 mm. Here, as shown in Fig. 8, the width a1 and the width a2 are defined based on the center in the sipe width of the projection portion 150.

A length b along the tire circumferential direction Dc of the first inclined portion 151 is approximately 2.0 mm. A length b is also defined based on the center in the sipe width of the projection portion 150. Here, it is preferable that the length b (amplitude A') is shorter than the amplitude A described above (see Fig. 4).

Generally in a passenger vehicle tire, a depth of the groove 30 is set in a range between 8 mm and 12 mm, the depth D of the sipe is set in a range between 5 mm and 10 mm, the period F is set in a range between 2.4 mm and 3.2 mm, and the amplitude A' is set in a range between 1.0 mm and 1.4 mm, while in the present embodiment, in the passenger vehicle tire, the depth of the groove 30 is set in a range between 8 mm and 12 mm and the depth D of the sipe is set in a range between 5 mm and 10 mm, which are the same as those described above, however the period F is set in a range between 5.4 mm and 10.0 mm and the amplitude A' is set in a range between 2.0 mm and 2.4 mm, namely the period F is three times as large as that in the conventional example, and the amplitude A' is twice as large as that in the conventional example.

Further, in a truck, tire, a bus tire, or the like, the depth of the groove is different although the ratio thereof to the depth D of the sipe is not different.

The period (period F) defined by a length of the projection portion 150 in the tire width direction is set in a range between 0.8 times and 2.0 times as large as the sipe depth (depth D, see Fig. 7) defined by a length between the wheel tread of the block 20A of the sipe 100A and the bottom of the sipe 100A. Here, in this case, the period F denotes a length of one projection portion 150 in the tire width direction D_{T}, namely a half of a period. Similarly, in this case, the amplitude A' denotes a length of one projection portion 150 in the tire circumferential direction Dc, namely a half of amplitude.

Further, it is preferable that the amplitude A' defined by a length of the projection portion 150 in the tire circumferential direction Dc in the tread surface view is set in a range between 0.25 times and 1.20 times as large as the depth D, more preferably in a range between 0.30 times and 1.00 time as large as the depth D.

It is preferable that the length of the straight portion 152 in the tread surface view is set in a range between 0.20 times and 0.35 times as large as the depth D, more preferably in a range between 0.22 times and 0.30 times as large as the depth D. Further, it is preferable that the length of the straight portion 152 in the tread surface view is set in a range between 0.5 times and 0.8 times as large as at least one of the length of the first inclined portion 151 and the second inclined portion 153, more preferably in a range between 0.6 times and 0.7 times as large as at least one of the length of the first inclined portion 151 and the second inclined portion 153.

It is preferable that the angle between the straight portion 152 and either one of the first inclined portion 151 and the second inclined portion 152 is set in a range between 90 degrees and 150 degrees, more preferably in a range between 110 degrees and 145 degrees.

Further, projections 190 are formed on side walls 24 of the block 20A that form the first inclined portion 151. The projections 190 are formed on both of the side walls 24 of the block 20A so as to face each other. Similarly, the projections 190 are formed on side walls 25 of the block 20A that form the second inclined portion 153.

The projections 190 are formed at the center in an extending direction of the first inclined portion 151. Similarly, the projections 190 are formed at the center in an extending direction of the second inclined portion 153. Further, either one of the projections of the inclined portions may be formed at a position other than the center.

### (4) Tire mold

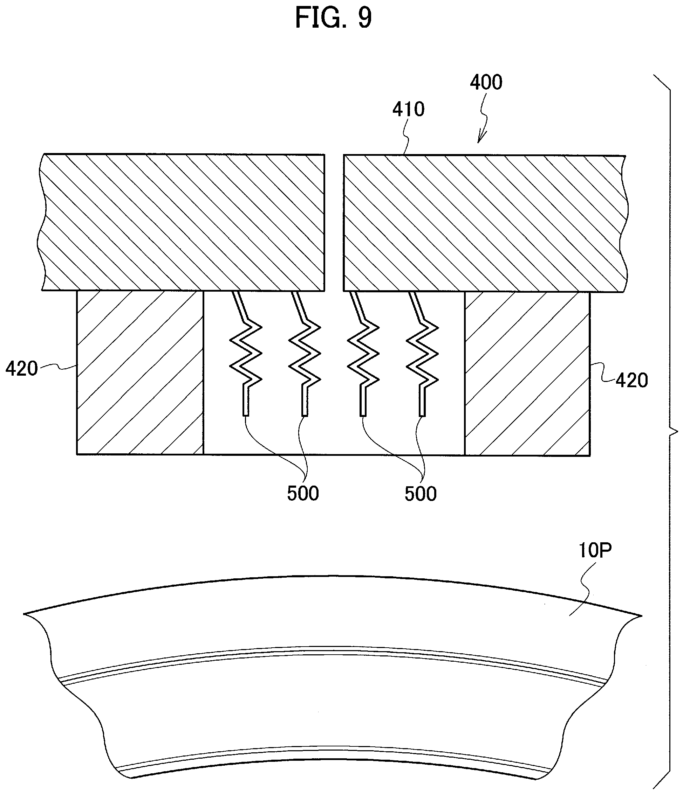

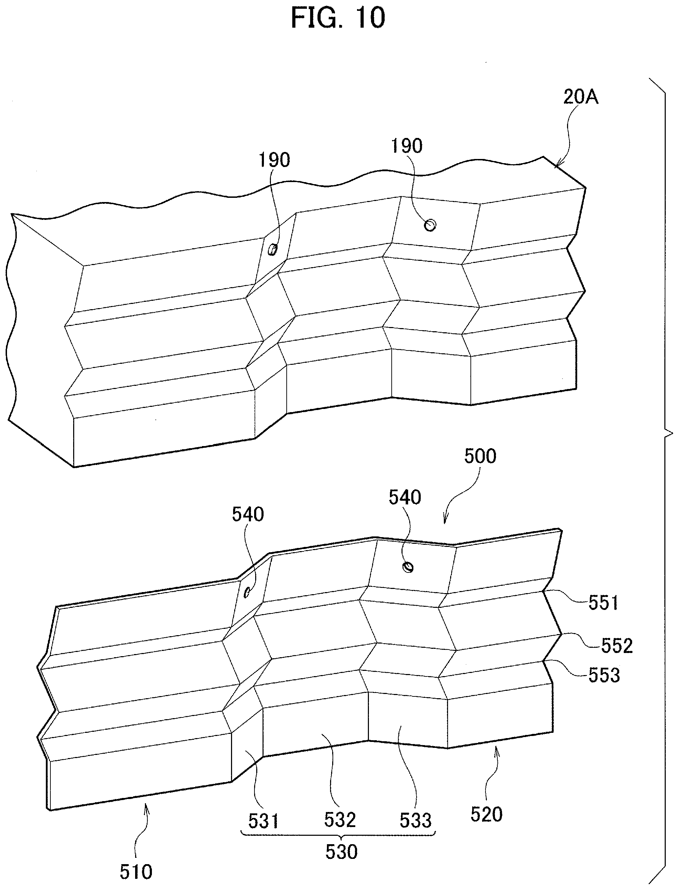

Next, a schematic configuration of a tire mold that vulcanizes and molds the block 20A of the pneumatic tire 10A is described with reference to Fig. 9 and Fig. 10.

Fig. 9 is a schematic cross-sectional view of a part of a tire mold 400. As shown in Fig. 9, the tire mold 400 includes a molding mold 410, a frame 420, and a plurality of blades 500.

The molding mold 410 is formed to face a tread of an unvulcanized tire 10P, which is a pneumatic tire before vulcanized, and is divided into a plurality of pieces in the tire circumferential direction Dc. The frame 420 is formed on a tread molding surface of the molding mold 410 so as to mold the groove 30 or the like.

The blade 500 is formed on the tread molding surface of the molding mold 410 so as to mold the sipe 100A.

Figs. 10 are a perspective view of the blade 500 and a view of a surface of the block 20A on which the sipe 100A is formed by the blade 500.

As shown in Figs. 10, the blade 500 includes a first straight portion 510, a second straight portion 520, and a projection portion 530.

The first straight portion 510 is extended linearly in the tire width direction. Similarly, the second straight portion 520 is extended in the tire width direction. The projection portion 530 is formed between the first straight portion 510 and the second straight portion 520 so as to be projected in the tire circumferential direction.

The projection portion 530 includes a first inclined portion 531, a straight portion 532, and a second inclined portion 533. The straight portion 532 is extended linearly in the tire width direction.

The first inclined portion 531 is continued to one end of the straight portion 532 and one end of the first straight portion 510. The first inclined portion 531 is inclined to spread toward an outer side in the tire width direction from the one end of the straight portion 532.

Similarly, the second inclined portion 533 is continued to another end of the straight portion 532 and one end of the second straight portion 520. The second inclined portion 533 is inclined to spread toward the outer side in the width direction from the another end of the straight portion 532.

One through hole 540 is formed in each of the first inclined portion 531 and the second inclined portion 533. The through hole 540 is formed to penetrate the blade 500 in a thickness direction thereof for the sake of an air vent in vulcanizing and molding the unvulcanized tire 10P by using the tire mold 400.

Further, the through hole 540 may be formed in at least one of the first inclined portion 531 and the second inclined portion 533.

Further, in the present embodiment, the through hole 540 is formed at the center in the extending direction of the first inclined portion 531 or the second inclined portion 533 of the blade 500.

Further, in the present embodiment, the through hole 540 is formed at the center in the extending direction of each of the first inclined portion 531 and the second inclined portion 533 of the blade 500. Here, in a case in which the through hole 540 cannot be formed at the center in the extending direction of each of the first inclined portion 531 and the second inclined portion 532 (for example, in a case in which a groove is formed around the center as an obstacle, or necessary mechanical strength is not secured), the through hole 540 may be formed in a region within ± 20% from the center.

In the present embodiment, the through hole 540 is formed in a circular shape, and the diameter of the through hole 540 is 1.0 mm. Further, in the present embodiment, the through hole 540 is formed at an end portion closer to the molding mold 410 in the blade 500. Specifically, the through hole 540 is formed in a region between 0.3 mm and 2.0 mm from the wheel tread of the block 20A toward an inner side in the tire radial direction. With this, air retained near the wheel tread of the block 20A in the vulcanizing and molding is vented, and bare defect such as the lack of the block 20A can be prevented.

Further, the projection 190 is formed by the rubber material entered into the through hole 540 in the vulcanizing and molding. Since the through hole 540 is formed at the end portion closer to the molding mold 410 in the blade 500, the projection 190 is formed closer to the wheel tread of the block 20A. Further, as shown in Fig. 8, the projections 190 are formed on both of the side walls 24 of the block 20A so as to face each other because the rubber material entered into the through hole 540 is divided by the blade 500 when the blade 500 is extracted from the vulcanized block 20A.

### (5) Functions and effects

According to the pneumatic tire 10A, in addition to the functions and the effects of the pneumatic tire 10A described above, the following functions and effects can be derived.

Specifically, in the sipe 100A, the projection portion 150 projected toward one side is formed at the center portion in the tire width direction D_{T}, and the first inclined portion 151 and the second inclined portion 153 are inclined to spread toward the outer side in the tire width direction respectively from the straight portion 152 in the tread surface view.

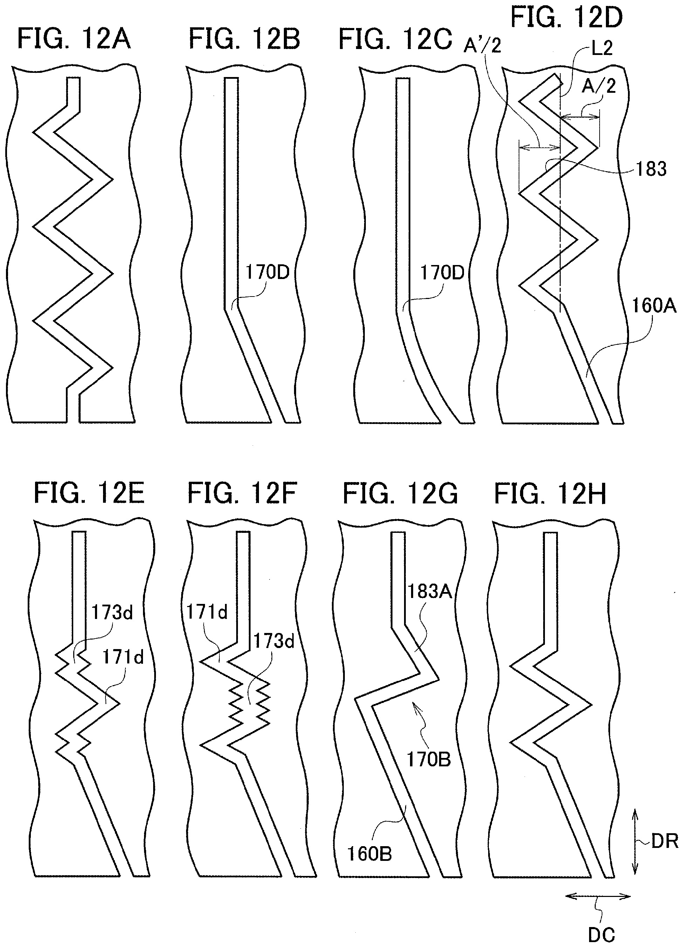

Thus, the bending rigidity of the blade 500 is made high. With this, the durability of the molding mold 410 (blade 500) can be improved in manufacturing the pneumatic tire 10A. Specifically, when the blade 500 is contacted with the unvulcanized tire 10P, the stress and the strain generated in the blade 500 is reduced largely, and thereby the durability of the blade 500 is improved largely. According to the blade 500, the durability thereof is increased to 120% through 150% of the durability of a blade for manufacturing a conventional three-dimensional sipe (see Fig. 12A described below).

More specifically, in the sipe 100 according to the first embodiment, the blade is formed linearly in the tire width direction D_{T}, and therefore the bending rigidity of the blade might not be secured sufficiently. However, according to the sipe 100A, such a problem can be solved. Further, even if the projection portion 150 is formed, the performance (the wear resistant performance and the ice and snow road performance) of the pneumatic tire 10A is not deteriorated largely compared to the pneumatic tire 10.

In particular, in the present embodiment, only one projection portion 150 is formed and the period F of the projection portion 150 is 0.8 times to 2.0 times as large as the depth D of the sipe. Further, the amplitude A' in the tire circumferential direction of the projection portion 150 is 0.25 times to 1.20 times as large as the depth D of the sipe, and the length of the straight portion 152 is 0.20 times to 0.35 times as large as the depth D of the sipe and 0.5 times to 0.8 times as large as at least one of the lengths of the first inclined portion 151 and the second inclined portion 153. Further, the angle between the straight portion 152 and either one of the first inclined portion 151 and the second inclined portion 153 is in the range between 90 degrees and 150 degrees.

In the sipe 100A having the projection portion 150 set in such numerical ranges, the necessary rigidity of the corresponding blade 500 can be secured sufficiently. While, it is not preferable that the amplitude A' is out of the numerical range because the number of the sipes formed in the block 20A is reduced.

Further, in the present embodiment, the through hole 540 is formed in each of the first inclined portion 531 and the second inclined portion 533. Thus, air can be vented in the vulcanizing and molding while securing the bending rigidity of the blade 500. That is, each of the first inclined portion 531 and the second inclined portion 533 is a bent portion having a narrow width for forming the projection portion 530 of the blade 500, and therefore the bending rigidity of each of the first inclined portion 531 and the second inclined portion 533 is made high. Accordingly, by forming the through hole 540 in this portions, the durability of the blade 500 can be secured.

In particular, in the present embodiment, since the through hole 540 is formed at the center in the extending direction of each of the first inclined portion 531 and the second inclined portion 533 and at the end portion closer to the molding mold 410 in the blade 500, the durability of the blade 500 can be further easily secured.

Further, the projections 190 are accordingly formed on the block 20A in association with such through holes 540. The projections 190 are preferable from a viewpoint of the improvement of the rigidity of the block 20A because the projections 190 are derived to support the side walls 24, 25 with each other.

### Other embodiments

As described above, the contents of the present invention are described with reference to the examples, however the present invention is not limited to those descriptions. It is obvious for a person skilled in the art to adopt various modifications and improvement.

For example, in the first embodiment (and the second embodiment), the sipe 100 includes the first sipe 160, the bent portion 170, and the second sipe 180, however the sipe 100 may be formed in a shape described below.

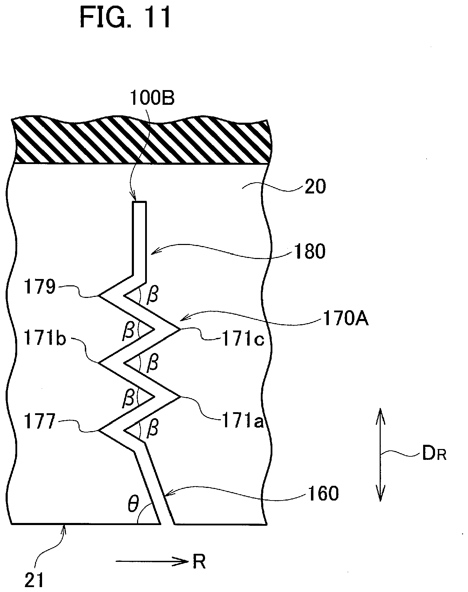

Fig. 11 is a side view of a sipe 100B in the tire width direction view. Specifically, Fig. 11 is a side view of the sipe 100B in a state in which the wheel tread 21 of the block 20 to be contacted with the road surface is arranged at a lower side in the figure.

As shown in Fig. 11, the sipe 100B is formed by the three portions similar to the sipe 100. Specifically, the sipe 100B includes the first sipe 160, a bent portion 170A, and the second sipe 180.

The shapes of the first sipe 160 and the second sipe 180 are similar to those in the sipe 100.

The bent portion 170A includes first bent portions 171a, 171b, 171c, a second bent portion 177, and a second bent portion 179.

The first bent portion 171a and the first bent portion 171c are bent to be projected in the rotation direction R, namely bent to be projected forward in the rotation direction R. On the other hand, the first bent portion 171b is bent in a direction opposite to the first bent portions 171a, 171c.

The second bent portion 177 is formed at a position closer to the first sipe 160 with respect to the first bent portion 171a. The second bent portion 177 is bent in a direction opposite to the first bent portion 171a in the tire width direction view.

The second bent portion 179 is formed at a position closer to the second sipe 180 with respect to the first bent portion 171c. The second bent portion 179 is bent in a direction opposite to the first bent portion 171c in the tire width direction view.

Angles of the first bent portion 171a, 171b, 171c, an angle of the second bent portion 177 and an angle (6) of the second bent portion 179 are set to the same angle.

Further, the sipe 100 may be formed in a shape described below. Figs. 12A to 12H are views illustrating modifications of the conventional sipe and the sipe 100. Specifically, Fig. 12A shows a shape of the conventional sipe as a reference, the sipe having a general zigzag shape (three-dimensional sipe) in the tread width direction view (hereinafter the same).

On the other hand, as shown in Figs. 12B and 12C, only one bent portion 170D may be formed in a portion of the sipe at an inner side in the tire radial direction as long as a portion of the sipe at a side of the wheel tread is inclined similar to that in the sipe 100. Further, as shown in Fig. 12C, the portion of the sipe at the side of the wheel tread is not necessarily formed linearly as long as the portion is inclined.

Further, as shown in Fig. 12D, a portion of the sipe at the inner side of the tire radial direction, specifically a second sipe, may be bent in a zigzag manner in the tire circumferential direction Dc. Further, in a configuration shown in Fig. 12D, an outer side portion 183 located at the outermost position in the second sipe in the tire radial direction Dc may be inclined in a direction opposite to a first sipe 160A with respect to the tire radial direction D_{R}.

Further, in the configuration shown in Fig. 12D, the amplitude (A/2) of the second sipe toward one side in the tire circumferential direction Dc with respect to a second sipe center line (straight line L2) may be the same as the amplitude (A'/2) of the second sipe toward another side in the tire circumferential direction with respect to the second sipe center line.

Since the second sipe is formed in a zigzag manner and the outer side portion 183 is inclined in a direction opposite to the first sipe with respect to the tire radial direction D_{R}, the performance scratching the ice and snow road by the first sipe can be secured, and the rigidity of the block can be further improved. Further, in a case in which the amplitudes (A/2, A'/2) of the second sipe are the same to each other, the generation of the moment M (see Fig. 5) is facilitated.

Further, as shown in Figs. 12E to 12H, at least either of the numbers, the amplitudes (lengths in the tire circumferential direction Dc) and the periods (lengths in the tire radial direction D_{R}) of the first bent portion and the second bent portion may be different from each other.

For example, as shown in Figs. 12E and 12F, the period defined by the length in the tire radial direction D_{R} of a first bent portion 171d may be larger than the period in the tire radial direction D_{R} of a second bent portion 173d. With such a shape, the generation of the moment M shown in Fig. 4 and Fig. 5 can be adjusted in accordance with the required performance.

Further, as shown in Fig. 12G, an outer side portion 183A of the second sipe is inclined to be projected in cooperation with the bent portion 170B toward one side (here, one side in the tire circumferential direction Dc) in a sipe extending direction view. Further, the first sipe 160B is inclined to be projected in cooperation with the bent portion 170B toward another side.

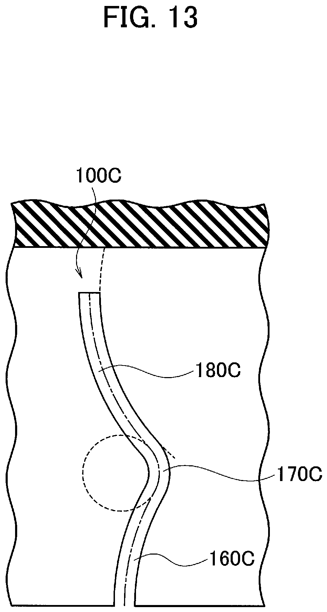

Further, the sipe 100 may be formed in a shape described below. Fig. 13 is a view illustrating a modification of the sipe 100. Specifically, as shown in Fig. 13, the sipe may be formed as a sipe 100C including a curved first sipe 160C and a curved second sipe 180C having predetermined curvatures (rotation radius) respectively. Further, a bent portion 170C formed between the first sipe 160C and the second sipe 180C is not formed in a shape with a sharp angle such like the sipe 100 but formed in a curved shape having a predetermined curvature.

Further, the sipe 100C may be represented as described below. Specifically, the sipe includes a first sipe located at a side of an opening end to a surface of a block, and a second sipe located at an inner side in a tire radial direction of the first sipe. Both of a sipe center line passing a sipe shallowest portion, which is the opening end of the sipe to the surface of the block, and a sipe deepest portion, which is an innermost portion in the tire radial direction, and an extending direction of the first sipe are inclined against the tire radial direction, and the sipe center line and the extending direction are inclined in opposite directions to each other.

Or alternatively, a sipe includes a first sipe located at a side of an opening end to a surface of a block, a second sipe located at an inner side in a tire radial direction of the first sipe, and a first bent portion communicated with an end of the first sipe at an inner side in the tire radial direction and an end of the second sipe at an outer side in the tire radial direction. A curvature radius of the second sipe is larger than a curvature radius of the bent portion, and a curvature center of the second sipe and a curvature center of the bent portion are located at opposite sides to each other with respect to the sipe.

Further, in the first embodiment described above, the opening end 161 of the first sipe 160 is offset from the straight line L2 toward the side of the rotation direction R in the tire width direction view. However, the opening end 161 is not necessarily offset toward the side of the rotation direction R.

For example, in a case in which an inside or an outside of the pneumatic tire when mounted to a vehicle is designated (so-called designation of Outside) instead of a case in which a rotation direction of the pneumatic tire is designated, the opening end 161 of the first sipe 160 may be offset toward one side or another side in the tire circumferential direction Dc in the block. Or alternatively, in a case of the designation of Outside, the opening end 161 of the first sipe 160 may be offset toward only one side in the tire circumferential direction Dc in the same block.

Further, in the second embodiment described above, only one projection portion 150 is formed and the projection portion 150 is projected toward one side in the tire circumferential direction Dc in the tread surface view. However, the number of the projection portions 150 is not necessarily set to one, and therefore a plurality of the projection portions 150 may be formed. Further, in a case in which the projection portion 150 is formed not only at one side but also at another side, it is preferable that both projection portions are formed in the same size from a viewpoint of securing the rigidity of the block and the blade 500.

Further, in a case in which a plurality of the projection portions 150 is formed, the first straight sipe 120 and the second straight sipe 130 are not necessarily arranged at the center of the projection portions 150 in the tire circumferential direction Dc.

Further, in the embodiments described above, the sipe 100, the sipe 100A and the like are extended along the tire width direction D_{T}, however the sipe 100, the sipe 100A and the like may be extended along a direction other than the tire width direction D_{T}, for example the tire circumferential direction Dc. In this case, the sipe extending direction view is changed. That is, in a case in which the sipe is extended along the tire circumferential direction Dc, the sipe extending direction view denotes a view seen from the tire circumferential direction (tire circumferential direction view).

Further, the present invention may be represented as described below. In one aspect of the present invention, a tire includes a sipe opened to a wheel tread of a tread portion. The sipe includes a first sipe formed at a side of the wheel tread, a second sipe located at an inner side in a tire radial direction with respect to the first sipe, and a bent portion communicated with an inner end in the tire radial direction of the first sipe and an outer end in the tire radial direction of the second sipe, the bent portion being bent in a predetermined direction. In a sipe extending direction view, a first sipe center line defined by a straight line passing the inner end in the tire radial direction of the first sipe and an outer end in the tire radial direction of the first sipe is inclined against the tire radial direction, and a second sipe center line defined by a straight line passing an inner end in the tire radial direction of the second sipe and the outer end in the tire radial direction of the second sipe is extended along the tire radial direction.

In the one aspect of the present invention, in the sipe extending direction view, the first sipe may be formed linearly.

In the one aspect of the present invention, in the sipe extending direction view, an outer portion, which is located at the outermost side in the tire radial direction, of the second sipe may be inclined to be projected in cooperation with the bent portion toward one side and the first sipe may be inclined to be projected in cooperation with the bent portion toward another side.

In the one aspect of the present invention, the bent portion may include a first bent portion bent toward one side in a tire circumferential direction and a second bent portion bent toward another side in the tire circumferential direction in the sipe extending direction view. The first bent portion may be located at a side of the first sipe with respect to the second sipe center line in a tire width direction. The second bent portion may be located at a side opposite to the first sipe with respect to the second sipe center line in the tire width direction.

In the one aspect of the present invention, in the sipe extending direction view, a minimum distance between the second sipe center line and an apex of the first bent portion may be the same as a minimum distance between the inner end in the tire radial direction of the first sipe and the outer end in the tire radial direction of the first sipe.

In the one aspect of the present invention, the number of the second bent portions may be larger than the number of the first bent portions.

In the one aspect of the present invention, the second sipe may be bent in a zigzag manner in the sipe extending direction view, and amplitude of the second sipe toward one side in a predetermined direction with respect to the second sipe center line may be the same as amplitude of the second sipe toward another side in the predetermined direction with respect to the second sipe center line.

In one aspect of the present invention, a tire includes a sipe extended in a predetermined direction and formed on a wheel tread of a tread portion. In a tread surface view: the sipe includes a first straight sipe extended linearly in the predetermined direction, a second straight sipe extended linearly in the predetermined direction, and a projection portion formed between the first straight sipe and the second straight sipe to be projected in a crossing direction crossing the predetermined direction; the projection portion includes a straight portion extended linearly, a first inclined portion continued to one end of the straight portion and one end of the first straight sipe and inclined to spread toward an outer side in the predetermined direction from the one end of the straight portion, and a second inclined portion continued to another end of the straight portion and one end of the second straight sipe and inclined to spread toward an outer side in the predetermined direction from the another end of the straight portion; and a period defined by a length of the projection portion in the predetermined direction is 0.8 times to 2.0 times as large as a sipe depth defined by a length of the sipe between the wheel tread of the tread portion and a bottom of the sipe.

In the one aspect of the present invention, in the tread surface view, amplitude defined by a length of the projection portion in the crossing direction may be 0.25 times to 1.20 times as large as the sipe depth.

In the one aspect of the present invention, in the tread surface view, a length of the straight portion may be 0.20 times to 0.35 times as large as the sipe depth.

In the one aspect of the present invention, in the tread surface view, a length of the straight portion may be 0.5 times to 0.8 times as large as at least one of a length of the first inclined portion and a length of the second inclined portion.

In the one aspect of the present invention, in the tread surface view, an angle between the straight portion and either one of the first inclined portion and the second inclined portion may be set in a range between 90 degrees and 150 degrees.

In the one aspect of the present invention, in the tread surface view, the projection portion may be projected toward one side in the crossing direction.

In one aspect of the present invention, a tire mold includes a molding mold including a blade for molding a sipe extended in a predetermined direction on a wheel tread of a tread portion. The blade includes a first straight portion extended linearly in the predetermined direction, a second straight portion extended linearly in the predetermined direction, and a projection portion formed between the first straight portion and the second straight portion to be projected in a crossing direction crossing the predetermined direction. The projection portion includes a straight portion extended linearly in the predetermined direction, a first inclined portion continued to one end of the straight portion and one end of the first straight portion and inclined to spread toward an outer side in the predetermined direction from the one end of the straight portion, and a second inclined portion continued to another end of the straight portion and one end of the second straight portion and inclined to spread toward an outer side in the predetermined direction from the another end of the straight portion. At least one of the first inclined portion and the second inclined portion includes a through hole penetrating the blade in a thickness direction of the blade.

In the one aspect of the present invention, the through hole may be formed at a center of the first inclined portion or the second inclined portion of the blade in an extending direction of the first inclined portion or the second inclined portion.

In the one aspect of the present invention, the through hole may be formed in an end portion closer to the molding mold in the blade.

In one aspect of the present invention, a tire includes a sipe extended in a predetermined direction and formed on a wheel tread of a tread portion. In a tread surface view: the sipe includes a first straight sipe extended linearly in the predetermined direction, a second straight sipe extended linearly in the predetermined direction, and a projection portion formed between the first straight sipe and the second straight sipe to be projected in a crossing direction crossing the predetermined direction; the projection portion includes a straight portion extended linearly in the predetermined direction, a first inclined portion continued to one end of the straight portion and one end of the first straight sipe and inclined to spread toward an outer side in the predetermined direction from the one end of the straight portion, and a second inclined portion continued to another end of the straight portion and one end of the second straight sipe and inclined to spread toward an outer side in the predetermined direction from the another end of the straight portion; and side walls of the tread portion that forms the first inclined portion include projections facing each other, and side walls of the tread portion that forms the second inclined portion include projections facing each other.

In the one aspect of the present invention, the projections may be formed at the center of the first inclined portion or the second inclined portion in an extending direction thereof.

In the one aspect of the present invention, the projections may be formed closer to the wheel tread of the tread portion.

### [Industrial Applicability]

According to the tire described above having the block in which the sipe is formed, the tire can be manufactured efficiently and both of the performance on the ice and snow roads and the performance on the non-ice and snow roads can be derived at a high level.

### [Reference Signs List]

- 10, 10A:: pneumatic tire
- 10P:: unvulcanized tire
- 15:: tread portion
- 20, 20A:: block
- 21:: wheel tread
- 22 to 25:: side wall
- 30:: groove
- 31:: groove bottom
- 100, 100A to 100C:: sipe
- 120:: first straight sipe
- 130:: second straight sipe
- 150:: projection portion
- 151:: first inclined portion
- 152:: straight portion
- 153:: second inclined portion
- 160, 160A to 160C:: first sipe
- 161:: opening end
- 162:: inner end
- 170, 170A to 170D:: bent portion
- 171, 171a to 171d:: first bent portion
- 173, 173d:: second bent portion
- 175:: second bent portion
- 177:: second bent portion
- 179:: second bent portion
- 180, 180C:: second sipe
- 181, 182:: end
- 183, 183A:: outer side portion
- 190:: projection
- 400:: tire mold
- 410:: molding mold
- 420:: frame
- 500:: blade
- 510:: first straight portion
- 520:: second straight portion
- 530:: projection portion
- 531:: first inclined portion
- 532:: straight portion
- 533:: second inclined portion
- 540:: through hole

## Claims

1. A tire (10) comprising a sipe (100) opened to a wheel tread (21) of a tread portion (20),
wherein:
the sipe (100) includes a first sipe (160) formed at a side of the wheel tread (21) , a second sipe (180) located at an inner side in a tire radial direction with respect to the first sipe (160), and a bent portion (170) communicated with an inner end (162) in the tire radial direction of the first sipe (160) and an outer end (182) in the tire radial direction of the second sipe (180), the bent portion being bent in a predetermined direction; and
in a sipe extending direction view,
a first sipe center line (L1) defined by a straight line passing the inner end in the tire radial direction of the first sipe (160) and an outer end (161) in the tire radial direction of the first sipe (160) is inclined against the tire radial direction, and a second sipe center line (L2) defined by a straight line passing an inner end (181) in the tire radial direction of the second sipe (180) and the outer end (182) in the tire radial direction of the second sipe (180) is extended along the tire radial direction, **characterized in that**
the inner end (162) in the tire radial direction of the first sipe (160) is located on the second sipe center line (L2) in the tire width direction view.

2. The tire according to claim 1, wherein, in the sipe extending direction view, the first sipe (160) is formed linearly.

3. The tire according to claim 1, wherein, in the sipe extending direction view, an outer portion (183), which is located at the outermost side in the tire radial direction, of the second sipe (180) is inclined to be projected in cooperation with the bent portion (170) toward one side and the first sipe (160) is inclined to be projected in cooperation with the bent portion (170) toward another side.

4. The tire according to claim 1, wherein:
the bent portion (170) includes a first bent portion bent (171) toward one side in a tire circumferential direction and a second bent portion (173) bent toward another side in the tire circumferential direction in the sipe extending direction view;
the first bent portion (171) is located at a side of the first sipe (160) with respect to the second sipe center line (L2) in a tire width direction; and
the second bent portion (173, 175) is located at a side opposite to the first sipe (160) with respect to the second sipe center line (L2) in the tire width direction.

5. The tire according to claim 4, wherein, in the sipe extending direction view, a minimum distance between the second sipe center line (L2) and an apex of the first bent portion (171) is the same as a minimum distance between the inner end (162) in the tire radial direction of the first sipe (160) and the outer end (161) in the tire radial direction of the first sipe (160).

6. The tire according to claim 4 or 5, wherein the number of the second bent portions (173, 175) is larger than the number of the first bent portions (171).

7. The tire according to claim 1, wherein:
the second sipe (180) is bent in a zigzag manner in the sipe extending direction view;
amplitude of the second sipe (180) toward one side in a predetermined direction with respect to the second sipe center line (L2) is the same as amplitude of the second sipe (180) toward another side in the predetermined direction with respect to the second sipe center line (L2).

## Patentansprüche

1. Reifen (10), der eine Lamelle (100) umfasst, die zu einer Radlauffläche (21) eines Laufflächenabschnitts (20) geöffnet ist, wobei:
die Lamelle (100) eine erste Lamelle (160), die an einer Seite der Radlauffläche (21) geformt ist, eine zweite Lamelle (180), die an einer in einer Reifenradialrichtung inneren Seite in Bezug auf die erste Lamelle (160) angeordnet ist, und einen gebogenen Abschnitt (170), der mit einem in der Reifenradialrichtung inneren Ende (162) der ersten Lamelle (160) und einem in der Reifenradialrichtung äußeren Ende (182) der zweiten Lamelle (180) in Verbindung steht, einschließt, wobei der gebogene Abschnitt in einer vorbestimmten Richtung gebogen ist, und
in einer Ansicht in Lamellenausdehnungsrichtung,
eine erste Lamellenmittellinie (L1), die durch eine gerade Linie definiert wird, die durch das in der Reifenradialrichtung innere Ende der ersten Lamelle (160) und ein in der Reifenradialrichtung äußeres Ende (161) der ersten Lamelle (160) hindurchgeht, gegen die Reifenradialrichtung geneigt ist, und eine zweite Lamellenmittellinie (L2), die durch eine gerade Linie definiert wird, die durch ein in der Reifenradialrichtung inneres Ende (181) der zweiten Lamelle (180) und das in der Reifenradialrichtung äußere Ende (182) der zweiten Lamelle (180) hindurchgeht, entlang der Reifenradialrichtung verlängert ist, **dadurch gekennzeichnet, dass**
das in der Reifenradialrichtung innere Ende (162) der ersten Lamelle (160) in der Ansicht in Reifenbreitenrichtung auf der zweiten Lamellenmittellinie (L2) angeordnet ist.

2. Reifen nach Anspruch 1, wobei, in der Ansicht in Lamellenausdehnungsrichtung, die erste Lamelle (160) linear geformt ist.

3. Reifen nach Anspruch 1, wobei, in der Ansicht in Lamellenausdehnungsrichtung, ein äußerer Abschnitt (183), der an der in der Reifenradialrichtung äußersten Seite angeordnet ist, der zweiten Lamelle (180) geneigt ist, so dass er in Zusammenwirken mit dem gebogenen Abschnitt (170) zu einer Seite hin vorspringt, und die erste Lamelle (160) geneigt ist, so dass sie in Zusammenwirken mit dem gebogenen Abschnitt (170) zu einer anderen Seite hin vorspringt.

4. Reifen nach Anspruch 1, wobei:
der gebogene Abschnitt (170) einen ersten gebogenen Abschnitt (171), der zu einer Seite in einer Reifenumfangsrichtung hin gebogen ist, und einen zweiten gebogenen Abschnitt (173), der zu einer anderen Seite in der Reifenumfangsrichtung hin gebogen ist, in der Ansicht in Lamellenausdehnungsrichtung, einschließt,
der erste gebogene Abschnitt (171) an einer Seite der ersten Lamelle (160) in Bezug auf die zweite Lamellenmittellinie (L2) in einer Reifenbreitenrichtung angeordnet ist und
der zweite gebogene Abschnitt (173, 175) an einer Seite, entgegengesetzt zu der ersten Lamelle (160), in Bezug auf die zweite Lamellenmittellinie (L2) in der Reifenbreitenrichtung angeordnet ist.

5. Reifen nach Anspruch 4, wobei, in der Ansicht in Lamellenausdehnungsrichtung, eine minimale Entfernung zwischen der zweiten Lamellenmittellinie (L2) und einem Scheitel des ersten gebogenen Abschnitts (171) die gleiche ist wie eine minimale Entfernung zwischen dem in der Reifenradialrichtung inneren Ende (162) der ersten Lamelle (160) und dem in der Reifenradialrichtung äußeren Ende (161) der ersten Lamelle (160).

6. Reifen nach Anspruch 4 oder 5, wobei die Anzahl der zweiten gebogenen Abschnitte (173, 175) größer ist als die Anzahl der ersten gebogenen Abschnitte (171).

7. Reifen nach Anspruch 1, wobei:
die zweite Lamelle (180) in der Ansicht in Lamellenausdehnungsrichtung auf eine Zickzackweise gebogen ist,
eine Amplitude der zweiten Lamelle (180) zu einer Seite in einer vorbestimmten Richtung hin in Bezug auf die zweite Lamellenmittellinie (L2) die gleiche ist wie eine Amplitude der zweiten Lamelle (180) zu einer anderen Seite in der vorbestimmten Richtung hin in Bezug auf die zweite Lamellenmittellinie (L2).

## Revendications

1. Bandage pneumatique (10) comprenant une lamelle (100) ouverte vers une bande de roulement de roue (21) d'une partie de bande de roulement (20) ; dans lequel :
la lamelle (100) inclut une première lamelle (160) formée au niveau d'un côté de la bande de roulement de roue (21), une deuxième lamelle (180) agencée au niveau d'un côté interne, dans une direction radiale du bandage pneumatique, par rapport à la première lamelle (160), et une partie fléchie (170) en communication avec une extrémité interne (162), dans la direction radiale du bandage pneumatique, de la première lamelle (160), et une extrémité externe (182), dans la direction radiale du bandage pneumatique, de la deuxième lamelle (180), la partie fléchie étant fléchie dans une direction prédéterminée ; et
dans une vue dans la direction d'extension de la lamelle :
une première ligne médiane de la lamelle (L1) définie par une ligne droite traversant l'extrémité interne, dans la direction radiale du bandage pneumatique, de la première lamelle (160), et une extrémité externe (161), dans la direction radiale du bandage pneumatique, de la première lamelle (160), est inclinée contre la direction radiale du bandage pneumatique, et une deuxième ligne médiane de la lamelle (L2) définie par une ligne droite traversant une extrémité interne (181), dans la direction radiale du bandage pneumatique, de la deuxième lamelle (180) et l'extrémité externe (182), dans la direction radiale du bandage pneumatique, de la deuxième lamelle (180), s'étend le long de la direction radiale du bandage pneumatique ; **caractérisé en ce que** :
l'extrémité interne (162), dans la direction radiale du bandage pneumatique, de la première lamelle (160) est agencée sur la deuxième ligne médiane de la lamelle (L2) dans la vue dans la direction de la largeur du bandage pneumatique.

2. Bandage pneumatique selon la revendication 1, dans lequel, dans la vue dans la direction d'extension de la lamelle, la première lamelle (160) a une forme linéaire.

3. Bandage pneumatique selon la revendication 1, dans lequel, dans la vue dans la direction d'extension de la lamelle, une partie externe (183) agencée au niveau du côté externe extrême, dans la direction radiale du bandage pneumatique, de la deuxième lamelle (180) est inclinée de sorte à s'étendre en coopération avec la partie fléchie (170) vers un côté, et la première lamelle (160) étant inclinée de sorte à s'étendre en coopération avec la partie fléchie (170) vers un autre côté.

4. Bandage pneumatique selon la revendication 1, dans lequel :
la partie fléchie (170) inclut une première partie fléchie, (171), fléchie vers un côté, dans une direction circonférentielle du bandage pneumatique, et une deuxième partie fléchie (173), fléchie vers un autre côté, dans la direction circonférentielle du bandage pneumatique, dans la vue dans la direction d'extension de la lamelle ;
la première partie fléchie (171) est agencée au niveau d'un premier côté de la première lamelle (160) par rapport à la deuxième ligne médiane de la lamelle (L2), dans une direction de la largeur du bandage pneumatique ; et
la deuxième partie fléchie (173, 175) est agencée au niveau d'un côté opposé à la première lamelle (160) par rapport à la deuxième ligne médiane de la lamelle (L2), dans la direction de la largeur du bandage pneumatique.

5. Bandage pneumatique selon la revendication 4, dans lequel, dans la vue dans la direction d'extension de la lamelle, une distance minimale entre la deuxième ligne médiane de la lamelle (L2) et un sommet de la première partie fléchie (17) est identique à une distance minimale entre l'extrémité interne (162), dans la direction radiale du bandage pneumatique, de la première lamelle (160) et l'extrémité externe (161), dans la direction radiale du bandage pneumatique, de la première lamelle (160).

6. Bandage pneumatique selon les revendications 4 ou 5, dans lequel le nombre des deuxièmes parties fléchies (173, 175) est supérieur au nombre des premières parties fléchies (171).

7. Bandage pneumatique selon la revendication 1, dans lequel :
la deuxième lamelle (180) est fléchie en zigzag dans la vue dans la direction d'extension de la lamelle ;
une amplitude de la deuxième lamelle (180) vers un côté, dans une direction prédéterminée, par rapport à la deuxième ligne médiane de la lamelle (L2) est identique à l'amplitude de la deuxième lamelle (180) vers un autre côté, dans la direction prédéterminée, par rapport à la deuxième ligne médiane de la lamelle (L2).
